# EUROPÄISCHE PATENTSCHRIFT

(11) **EP 0 847 833 B1**
(45) Veröffentlichungstag und Bekanntmachung des Hinweises auf die Patenterteilung: **27.02.2002**
(21) Anmeldenummer: 97119234.9
(22) Anmeldetag: 04.11.1997
(51) Int. Cl.: B23Q 3/155, B23Q 16/06

(54) **Tellermagazin**
Planar magazine
Magasin plat

(30) Priorität: 10.12.1996 DE 29621430 U
(43) Veröffentlichungstag der Anmeldung: 17.06.1998
(73) Patentinhaber: DECKEL MAHO GmbH, D-87459 Pfronten (DE)
(72) Erfinder: Lechleiter, Karl, Dipl.-Ing., 87466 Oy-Mittelberg (DE)
(74) Vertreter: Beetz & Partner Patentanwälte

(56) Entgegenhaltungen:
- DE-A- 2 927 823
- US-A- 1 975 008
- US-A- 2 021 030

## Beschreibung

Die Erfindung betrifft ein Tellermagazin zum Speichern von Werkzeugen an einer Werkzeugmaschine, das einen um eine Mittelachse drehbaren Teller mit mehreren an dessen Außenrand in gleichmäßiger Winkelteilung angeordneten Werkzeughaltern, mehrere in gleichmäßiger Winkelteilung am Teller vorgesehene Radialschlitze und ein drehangetriebenes Antriebsglied aufweist, das über die Radialschlitze den Teller antreibt.

Es sind bereits eine Vielzahl von unterschiedlichen Tellermagazinen bekannt, die je nach Maschinenkonstruktion seitlich, hinter oder oberhalb der Bearbeitungsspindel angeordnet sind. Sie weisen in aller Regel einen mit mehreren Werkzeughalterungen versehenen Drehteller auf, der durch einen Antriebsmotor über ein Getriebe positionierbar ist. Als Getriebe zur Umwandlung einer Drehbewegung des Antriebsmotors in eine geeignete Bewegung des Tellers zur Positionierung der Werkzeuge an einer vorbestimmten Übergabestellung wird vielfach ein Malteserkreuzgetriebe eingesetzt. Aus der DE 2927823 C2 ist beispielsweise ein Tellermagazin bekannt, bei dem ein als Drehteller ausgebildeter Werkzeugspeicher über ein Innenmalteserkreuzgetriebe von einem Stellmotor angetrieben wird. Das Treibrad dieses Malteserkreuzgetriebes enthält neben einem radial zur Drehachse des Treibrades versetzten Kurbelzapfen zum Eingriff in entsprechende Radialschlitze des Drehtellers eine als Kreissegment ausgebildete zusätzliche Sperrscheibe, die zur Blockierung des Antriebs während der Ruhephase in eine entsprechende Ausrundung zwischen zwei Radialschlitzen am Drehteller eingreift. Die Herstellung der Treibscheibe mit der Sperrscheibe und den zugehörigen Aussparungen in dem Drehteller ist jedoch fertigungstechnisch aufwendig und daher mit entsprechend hohen Fertigungskosten verbunden. Außerdem wird bei diesem Antrieb der Teller bei einer vollen Umdrehung der Treibscheibe jeweils nur um einen Werkzeughalteplatz weitertransportiert, wobei die Bewegung des Drehtellers durch verhältnismäßig lange Stillstandzeiten unterbrochen ist.

Aufgabe der Erfindung ist es, ein einfach zu fertigendes und kostengünstiges Tellermagazin zu schaffen, das schnelle Werkzeugwechsel ermöglicht.

Diese Aufgabe wird erfindungsgemäß dadurch gelöst, daß ausgehend vom Stand der Technik gemäß Oberbegriff von Anspruch 1 das Antriebsglied zwei Treibzapfen aufweist, die bei Drehbewegung um eine gemeinsame Mittelachse den Teller periodisch weitertransportieren

Ein wesentlicher Vorteil des erfindungsgemäßen Tellermagazins besteht darin, daß die bei den üblichen Malteserkreuzgetrieben vorhandenen längeren Stillstandzeiten des Tellers zwischen den Teilschrittbewegungen vermieden werden können. Da der Teller ferner mit jeder halben Umdrehung des Antriebselements um jeweils einen Werkzeughalteplatz weitertransportiert werden kann, ist es möglich, die am Umfang des Tellers verteilten Werkzeughalter schneller in eine vorbestimmte Übergabe- bzw. Übernahmeposition zu bewegen, in der ein ausgewähltes Werkzeug entweder durch einen gesonderten Werkzeugwechsler oder unmittelbar durch eine Arbeitsspindel aus dem Tellermagazin entnommen oder in diesem abgelegt wird. Darüber hinaus ergibt sich gegenüber den bekannten Tellermagazinen eine konstruktive Vereinfachung, da keine gesonderten Sperrelemente an dem Antriebselement und dem Teller erforderlich sind. Als Antriebsmotor zur Drehung des Antriebselements kann z.B. ein einfach aufgebauter Stellmotor verwendet werden, der u.a. als Scheibenwischermotor in Kraftfahrzeugen verwendet wird. Es sind keine aufwendigen Servoantriebe erforderlich.

In einer vorteilhaften Ausführung enthält der Teller eine mit den Radialschlitzen versehenen Ringscheibe und eine mit dieser in einem vorgegeben Abstand drehfest verbundene Tellerscheibe, an der die Werkzeughalter befestigt sind. Dadurch ergibt sich eine materialsparende und dennoch stabile Konstruktion. Bei einer einteiligen Ausführung des Tellers können die Radialschlitze aber auch unmittelbar am Teller vorgesehen sein.

Bei einer bevorzugten Ausführung sind die Radialschlitze am Außenrand der Ringscheibe vorgesehen. Es ist allerdings auch ein Antriebskonzept möglich, bei dem die Radialschlitze am Innenrand einer entsprechend gestalteten Ringscheibe angeordnet sind.

Zur Verringerung von Verschleißerscheinungen an den Treibzapfen und dem Teller sind die Treibzapfen zweckmäßigerweise um ihre Mittelachse drehgelagert angeordnet.

Weitere Besonderheiten und Vorzüge der Erfindung ergeben sich aus den weiteren Unteransprüchen und der folgenden Beschreibung eines bevorzugten Ausführungsbeispiels anhand der Zeichnung. Es zeigen:
- Fig.1: eine Draufsicht einer Universal- Fräs-und Bohrmaschine;
- Fig. 2: eine Seitenansicht eines erfindungsgemäßen Tellermagazins im Schnitt;
- Fig. 3: eine Draufsicht des Tellermagazins von Fig. 2; und
- Fig. 4: eine vergrößerte schematische Teilansicht des Antriebs zur Drehung des Tellermagazins.

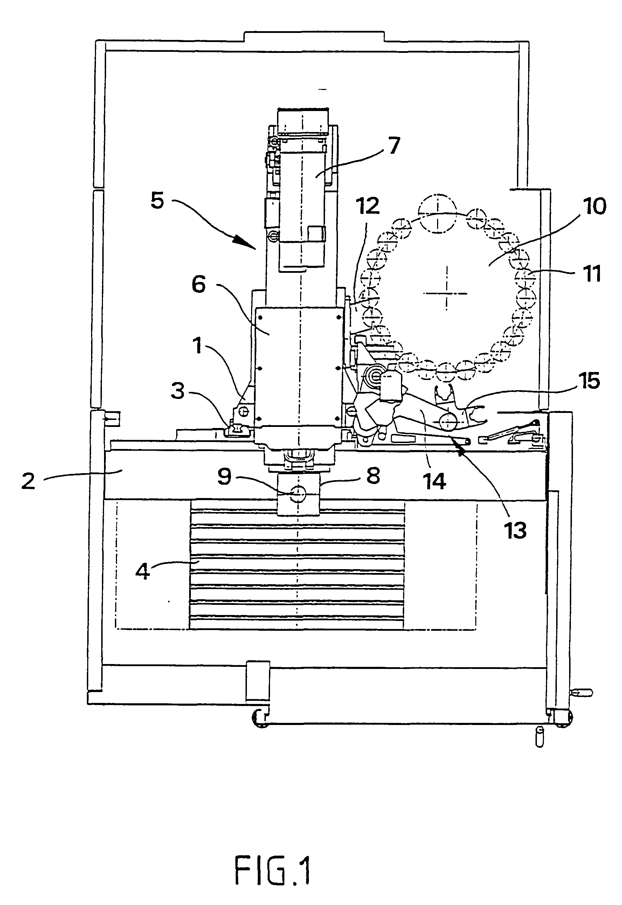

Die in Fig. 1 in Draufsicht dargestellte Universal- Fräs-und Bohrmaschine enthält einen Maschinenständer 1, an des sen Vorderseite eine Konsole 2 über Senkrechtführungen 3 in der Y-Achse vertikal verfahrbar angeordnet ist. Die Konsole 2 trägt einen in der X-Achse horizontal verschiebbaren Werkstücktisch 4. Auf der Oberseite des Maschinenständers 1 ist eine Bearbeitungseinheit 5 in der Z-Achse horizontal verschiebbar geführt. Die Antriebsmotoren und Übertragungselemente für die Verfahrbewegungen der vorstehend genannten Bauteile sind in Fig. 1 nicht dargestellt. Die Bearbeitungseinheit 5 umfaßt einen Spindelstock 6 mit einer darin gelagerten und von einem Motor 7 angetriebenen horizontalen Arbeitsspindel und einen an der vorderen Stirnseite des Spindelstocks 6 angeordneten Fräskopf 8 mit einer darin gelagerten vertikalen Arbeitsspindel 9. Der Fräskopf 8 ist aus der in Fig.1 gezeigten Arbeitsstellung in eine Ruhestellung nach oben verschwenkbar und ermöglicht so eine schnelle Umrüstung zur Bearbeitung mit der horizontalen - oder vertikalen Arbeitsspindel.

Seitlich neben dem Spindelstock 6 ist ein motorisch verdrehbares Tellermagazin 10 für mehrere Bearbeitungswerkzeuge 11 angeordnet, das von einer am Maschinenständer 1 seitlich befestigten Stütze 12 gehalten wird. Vor dem Tellermagazin 10 ist seitlich am Maschinenständer 1 ein automatischer Werkzeugwechsler 13 mit einem verschwenkbaren Tragarm 14 und einem Doppelgreifer 15 zum Transport der Bearbeitungswerkzeuge 11 zwischen dem Tellermagazin 10 und der vertikalen Arbeitsspindel 9 montiert.

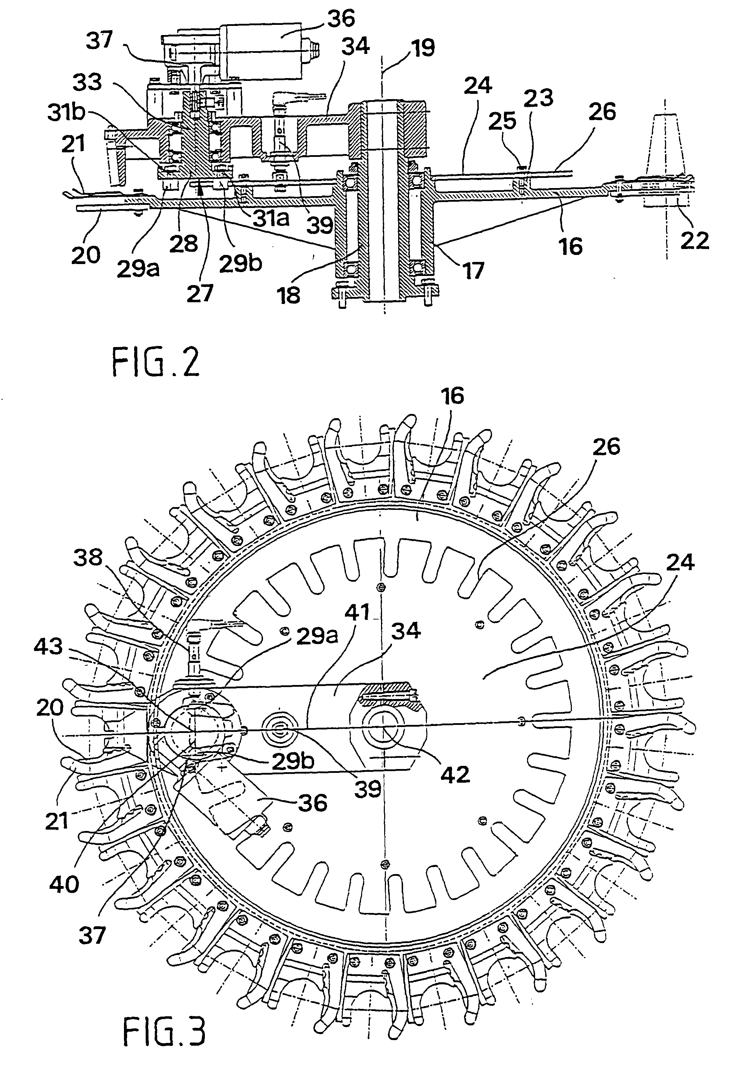

Das in den Fig. 2 und 3 im einzelnen dargestellte Tellermagazin 10 enthält eine Tellerscheibe 16 mit einer mittigen hohlzylindrischen Lagerbuchse 17 , durch welche die Tellerscheibe 16 auf einem an der Stütze 12 befestigbaren Lagerzapfen 18 um eine vertikale Mittelachse 19 drehbar gelagert ist. An dem Außenumfang der Tellerscheibe 16 sind mehrere in gleichmäßiger Winkelteilung angeordnete zangenförmige Werkzeughalter 20 mit oberen Federlaschen 21 befestigt, durch die der Ringbund einer in Fig. 2 gestrichelt dargestellten Werkzeugaufnahme 22 mit nach oben ragendem Aufnahmekegel zur Fixierung der Werkzeuge im Tellermagazin 10 an die zangenförmigen Werkzeughalter 20 angedrückt wird. Auf der Oberseite der Tellerscheibe 16 sind Distanzstücke 23 angeformt, auf denen eine zur Vertikalachse 19 konzentrische Ringscheibe 24 unter einem vorgegebenen Abstand zur Tellerscheibe 16 durch Schrauben 25 befestigt ist. An ihrem Außenumfang weist die Ringscheibe 24 eine der Anzahl der Werkzeughalter 20 entprechende Anzahl an gleichwinklig beabstandeten Radialschlitzen 26 auf, die gegenüber den Werkzeughaltern 20 um eine halbe Winkelteilung versetzt sind.

Der Antrieb der Tellerscheibe 16 erfolgt durch ein motorisch verdrehbares Antriebsglied 27, das eine Treibscheibe 28 und zwei an deren Stirnseite diametral gegenüberliegend angeordnete Treibzapfen 29a, 29b aufweist, die zum Eingriff in die Radialschlitze 26 an der Ringscheibe 24 angeordnet sind. Die Anordnung und die Form der beiden Treibzapfen 29a und 29b und der Radialschlitze sind dabei so aufeinander abgestimmt, daß in jeder Stellung, in der sich einer der Werkzeughalter 20 in einer festgelegten Übergabe- bzw. Übernahmeposition befindet, beide Treibzapfen 29a und 29b an der Außenseite zweier aufeinanderfolgende Radialschlitze 26 eingreifen. In dieser Stellung wird durch die beiden Treibzapfen 29a und 29b ein unerwünschtes Weiterdrehen der Ringscheibe 24 verhindert, wodurch eine ausreichende Fixierung des Tellerscheibe 16 in der Übergabeposition ermöglicht wird. Durch eine Drehung der Treibscheibe 27 um 180° kann der nächste Werkzeughalter 20 in die vorbestimmte Übergabestellung transportiert werden.

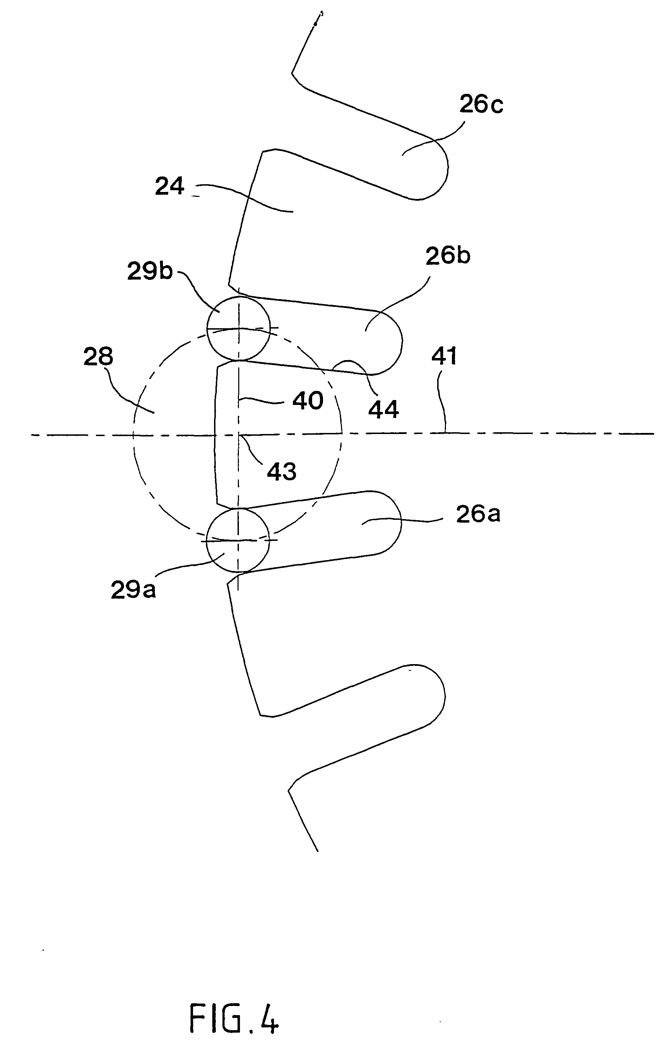

Um einem Verschleiß an den Treibzapfen und den Radialschlitzen zu vermeiden, sind die Treibzapfen 29a,29b auf jeweils einem an der Treibscheibe 28 befestigten Lagerbolzen 31a bzw. 31b drehbar gelagert. Der Außendurchmesser der Treibzapfen 29a,29b ist dabei etwas kleiner wie die Breite der Radialschlitze 26. Wie besonders aus Fig. 4 hervorgeht, sind die Radialschlitze 26 an ihrer Eintrittsöffnung beidseitig mit Einlaufradien bzw. -schrägen 32 versehen. Die Treibscheibe 27 ist über eine mit ihr einstückig ausgebildete Antriebswelle 33 in einer Horizontalstütze 34 um eine vertikale Mittelachse 35 drehbar gelagert. Die Horizontalstütze 34 ist seitlich auskragend auf dem oberen Ende des Lagerzapfens 18 drehfest fixiert. Die Antriebswelle 33 der Treibscheibe 27 wird von einem auf der Horizontalstütze 34 montierten Stellmotor 36 über ein Schneckengetriebe 37 angetrieben. Zur Überwachung der Schaltstellungen der Tellerscheibe 16 sind ein horizontaler und ein vertikaler berührungsloser Schalter 38 und 39 vorgesehen.

Der Bewegungsablauf zum Weitertransport des Tellermagazins um einem Werkzeughalteplatz wird im folgenden anhand der Fig. 4 näher erläutert, in der ein Teilabschnitt der Ringscheibe 24 mit den Radialschlitzen 26 und die Treibscheibe 28 mit den beiden Treibzapfen 29a, 29b schematisch dargestellt sind. In Fig. 4 ist vergrößert eine auch in Fig. 3 gezeigte Stellung der Treibscheibe 28 gezeigt, in der eine Verbindungslinie 40 zwischen den Mittelpunkten der beiden Treibzapfen 29a und 29b senkrecht ist zu einer Verbindungslinie 41 zwischen einem Drehpunkt 42 der Ringscheibe 24 und einem einem Drehpunkt 43 der Treibscheibe 28. In dieser Stellung greifen die beiden Treibzapfen 29a und 29b in zwei nebeneinanderliegende Radialschlitze 26 ein, wodurch der in Fig.3 äußerste linke Werkzeughalter 20 in einer Übergabe- bzw. Übernahmeposition gehalten wird.

Wenn die Treibscheibe 28 aus dieser Stellung im Uhrzeigersinn gedreht wird, gelangt der in Fig. 4 untere Treibzapfen 29a außer Eingriff mit dem Schlitz 26a. Gleichzeitig bewegt sich der obere Treibzapfen 29b in den Radialschlitz 26b hinein und wälzt sich an seiner in Fig. 4 unteren Seitenwand 44 ab. Dabei wird die Ringscheibe 24 und die mit ihr fest verbundene Tellerscheibe 16 ebenfalls in Uhrzeigersinn weitergedreht, bis der Treibzapfen 29a in den Radialschlitz 26c eintritt. Nach einer Drehung der Antriebscheibe um 180° befindet sich der nächste Werkzeughalter in der Übergabestellung.

## Patentansprüche

1. Tellermagazin mit
- einem um eine Mittelachse (19) verdrehbaren Teller (16,24), an dessen Außenrand mehrere Werkzeughalter (20) in gleichmäßiger·Winkelteilung angeordnet sind,
- mehreren in gleichmäßiger Winkelteilung am Teller (16,24) vorgesehenen Radialschlitzen (26) und
- einem drehangetriebenen Antriebsglied (27), das über die Radialschlitze (26) den Teller (16,24) antreibt
**dadurch gekennzeichnet, daß**
das Antriebsglied (27) zwei Treibzapfen (29a,29b) aufweist, die bei einer Drehbewegung um eine gemeinsame Mittelachse (35) den Teller (16,24) periodisch weitertransportieren.

2. Tellermagazin nach Anspruch 1, **dadurch gekennzeichnet, daß** die Treibzapfen (29a,29b) den Teller (16,24) bei jeder 180°-Drehung des Antriebsglieds (27) um einen Werkzeughalteplatz weitertransportieren.

3. Tellermagazin nach Anspruch 1 oder 2, **dadurch gekennzeichnet, daß** das Antriebsglied (27) eine motorisch angetriebene Treibscheibe (28) aufweist, an der die Treibzapfen (29a,29b) diametral gegenüberliegend angeordnet sind.

4. Tellermagazin nach einem der Ansprüche 1 bis 3, **dadurch gekennzeichnet, daß** jeder Treibzapfen (29a,29b) zum Eingriff in jeden zweiten Radialschlitz (26) angeordnet ist.

5. Tellermagazin nach einem der Ansprüche 1 bis 4, **dadurch gekennzeichnet, daß** der Teller (16, 24) eine Tellerscheibe (16) und eine mit dieser in einem vorgegebenen Abstand drehfest verbundene Ringscheibe (24) umfaßt, in der die Radialschlitze (26) ausgebildet sind.

6. Tellermagazin nach Anspruch 5, **dadurch gekennzeichnet, daß** sich die Radialschlitze (26) vom Außenrand der Ringscheibe (24) nach innen erstrecken.

7. Tellermagazin nach einem der Ansprüche 1 bis 6, **dadurch gekennzeichnet, daß** die Radialschlitze (26) an ihrer Eintrittöffnung beidseitig mit Einlaufradien oder Einlaufschrägen (32) versehen sind.

8. Tellermagazin nach einem der Ansprüche 1 bis 7, **dadurch gekennzeichnet, daß** die Treibzapfen (29a,29b) auf jeweils einem Bolzen (31a,31b) drehbar gelagert sind.

9. Tellermagazin nach einem der Ansprüche 1 bis 8, **dadurch gekennzeichnet, daß** die Treibscheibe (28) über einen Wellenzapfen (33) in einer Horizontalstütze (34) gelagert ist, die seitlich auskragend auf einem Lagerzapfen (18) zur Lagerung des Tellers (16,24) befestigt ist.

10. Tellermagazin nach Anspruch 9, **dadurch gekennzeichnet, daß** die Treibscheibe (28) von einem auf der Horizontalstütze (34) angeordneten Motor (36) über ein Schnekkengetriebe (37) angetrieben wird.

## Claims

1. A tool magazine disc comprising
- a disc (16, 24) able to rotate about a central axis (19), on whose outer edge is arranged a plurality of tool holders (20) at uniform angles
- a plurality of radial slots (26) arranged at uniform angles on the plate (16, 24) and
- a rotationally driven driving element (27) which drives the disc (16, 24) over the radial slots (26)
**characterised by** the fact that:
the driving element (27) has two driving journals (29a, 29b) which turn about a common central axis (35) and periodically transport the disc (16, 24) onwards.

2. A tool magazine disc according to Claim 1,
**characterised by** the fact that
the driving journals (29a, 29b) transport the disc (16, 24), on every 180° revolution of the driving member (27), one tool holder further.

3. A tool magazine disc according to Claims 1 or 2,
**characterised by** the fact that
the driving member (27) has a motor-driven driving disc (28), on which the driving journals (29a, 29b) are arranged diametrically opposite one another.

4. A tool magazine disc according to one of the Claims 1 to 3,
**characterised by** the fact that
each driving journal (29a, 29b) is arranged to mesh with every second radial slot (26)

5. A tool magazine disc according to one of the Claims from 1 to 4,
**characterised by** the fact that
the disc (16, 24) comprises a disc (16) and a ring (24), which is connected to the former at a pre-set distance and cannot rotate and in which the radial slots (26) are formed.

6. A tool magazine disc according to Claim 5
**characterised by** the fact that
the radial slots (26) extend inwards from the outer edge of the ring (24).

7. A tool magazine disc according to one of the Claims 1 to 6,
**characterised by** the fact that
the radial slots (26) are provided on both sides of their entry opening with rounded inlet or bevelled inlet (32).

8. A tool magazine disc according to one of the Claims 1 to 7,
**characterised by** the fact that
the driving journals (29a, 29b) are each rotationally carried on a shaft (31a, 31b).

9. A tool magazine disc according to one of the Claims 1 to 8,
**characterised by** the fact that
the driving disc (28) is carried in a horizontal support (34) via a shaft journal (33), from which it protrudes sideways and is fastened to a bearing journal (18) for the carrying of the disc (16,24)

10. A tool magazine disc according to Claim 9,
**characterised by** the fact that the driving disc (28) is driven by a motor (36) arranged via a worm gear pair (37) on a horizontal support (34).

## Revendications

1. Magasin à plateau comportant
- un plateau (16, 24) pouvant tourner autour d'un axe médian (19) au bord extérieur duquel sont disposés plusieurs supports à outils (20) avec un écart angulaire régulier,
- plusieurs fentes radiales (26) prévues avec un écart angulaire régulier sur le plateau (16, 24) et
- un élément de commande (27) actionné par rotation qui entraîne le plateau (16, 24) par l'intermédiaire des fentes radiales (26),
**caractérisé en ce que**
l'élément de commande (27) présente deux pivots d'entraînement (29a, 29b) qui, par un mouvement de rotation autour d'un axe médian (35) commun, transportent périodiquement le plateau (16, 24).

2. Magasin à plateau conformément à la revendication 1,
**caractérisé en ce que**
les pivots d'entraînement (29a, 29b) transportent le plateau (16, 24) autour d'un support d'outils à chaque rotation sur 180° de l'élément de commande (27).

3. Magasin à plateau conformément à la revendication 1 ou 2,
**caractérisé en ce que**
L'élément de commande (27) présente un disque d'entraînement (28) commandé par moteur sur lequel les pivots d'entraînement (29a, 29b) sont diamétralement opposés.

4. Magasin à plateau conformément à l'une des revendications 1 à 3, **caractérisé en ce que**
chaque pivot d'entraînement (29a, 29b) est disposé pour pouvoir être en prise dans une fente radiale (26) sur deux.

5. Magasin à plateau conformément à une des revendications 1 à 4,
**caractérisé en ce que**
le plateau (16, 24) comprend un disque de plateau (16) et un disque annulaire (24) relié à celui-ci à une distance donnée pour éviter sa rotation et dans lequel sont formées les fentes radiales (26).

6. Magasin à plateau conformément à la revendication 5,
**Caractérisé en ce que**
les fentes radiales (26) s'étendent du bord extérieur du disque **caractérisé par le fait que** annulaire (24) vers l'intérieur.

7. Magasin à plateau conformément à une des revendications 1 à 6,
**caractérisé en ce que**
les fentes radiales (26) sont munies des deux côtés de leur ouverture d'entrée d'arrondis ou de chanfreins (32) d'entrée.

8. Magasin à plateau conformément à une des revendications 1 à 7,
**caractérisé en ce que**
les pivots d'entraînement (29a, 29b) sont disposés chacun sur un tourillon (31a, 31b) de façon à pouvoir tourner.

9. Magasin à plateau conformément à une des revendications 1 à 8,
**caractérisé en ce que**
le disque d'entraînement (28) est placé sur un appui horizontal (34) par l'intermédiaire d'un pivot d'arbre (33), appui qui est fixé latéralement en saillie sur un tourillon (18) pour le positionnement du plateau (16, 24).

10. Magasin à plateau conformément à la revendication 9,
**caractérisé en ce que**
le disque d'entraînement (28) est actionné par un moteur (36) disposé sur l'appui horizontal (34) par l'intermédiaire d'un engrenage à vis sans fin (37).
